# EUROPÄISCHE PATENTANMELDUNG

(11) **EP 4 290 326 A1**
(43) Veröffentlichungstag der Anmeldung: **13.12.2023**
(21) Anmeldenummer: 22178194.1
(22) Anmeldetag: 09.06.2022
(51) Int. Cl.: G05B 23/02

(54) **LEITSYSTEM FÜR EINE TECHNISCHE ANLAGE UND BETRIEBSVERFAHREN**

(71) Anmelder: Siemens Aktiengesellschaft, 80333 München (DE)
(72) Erfinder: Lutz, Benjamin, 76327 Pfinztal (DE)
(74) Vertreter: Siemens Patent Attorneys

(57) **Zusammenfassung**

Vorgeschlagen wird ein Leitsystem (19) für eine technische Anlage, insbesondere Fertigungs- oder Prozessanlage, das dazu ausgebildet ist, wenigstens eine Meldung (2a, 2b, 2c, 2d, 2e, 2f, 2g, 2h, 2i) in einer Meldeanzeige (1) und einen zeitlichen Verlauf (9, 14) eines Messwertes in einem zeitlichen Verlaufsdiagramm (10, 15) visuell darzustellen.

Das Leitsystem (16) ist dadurch gekennzeichnet, dass es dazu ausgebildet ist, zur Laufzeit der technischen Anlage auf eine Anforderung (8, 11) eines Operators des Leitsystems (19) hin in dem zeitlichen Verlaufsdiagramm (10, 15) zusätzlich zu dem zeitlichen Verlauf (9, 14) des Messwertes einen zeitlichen Aspekt (12a, 12b, 12c, 12d, 16a, 16b, 16c) der Meldung (2a, 2b, 2c, 2d, 2e, 2f, 2g, 2h, 2i) visuell darzustellen.

## Beschreibung

Die Erfindung betrifft ein Leitsystem für eine technische Anlage, insbesondere Fertigungs- oder Prozessanlage. Außerdem betrifft die Erfindung eine Verwendung eines Leitsystems zum Betrieb einer technischen Anlage.

Für die Bedienung und Beobachtung verfahrenstechnischer Anlagen werden symbolische Anlagenbilder erstellt, die die verfahrenstechnischen Zusammenhänge - insbesondere zwischen einzelnen Prozessobjekten - abstrahiert darstellen. Anlagenbilder setzen sich dabei aus statischen Symbolen (z.B. Leitungen, Rechtecke, usw.), dynamisierten Symbolen (z.B. in Abhängigkeit von Prozesswerten Leitungen mit Farbumschlag, Rechtecke mit Füllständen, usw.), Blocksymbolen (zur dynamisierten Visualisierung verfahrenstechnischer Prozessobjekte), komplexe Controls (z.B. Trendanzeigen, Meldefolgeanzeigen, usw.) und Container, um Inhalte aus unabhängigen und eigenständige Quellen visualisieren zu können (z.B. Webcams, Anlagenbilder modulare Anlagenteile, oder Applikationen wie ein Regleroptimierer oder KPI-Berechnungen) zusammen.

Verfahrenstechnische Anlagen sind in der Regel strukturiert nach Anlage, Teilanlage, technische Einrichtung bis hinunter zur Messstelle. Diese Struktur wirkt sich auch auf Gerätestruktur und auf die die Bedienung und Beobachtung aus. Wird ein Alarm in einem verfahrenstechnischen Anlagenteil gemeldet, so trägt er auch dessen Bereichskennung (technologische Pfadangabe).

Auch wenn verfahrenstechnische Anlagen streng strukturiert werden, so hängen sie dennoch physikalisch zusammen - z.B. über Rohrleitungen. Dementsprechend können verfahrenstechnisehe Ereignisse sich nicht nur auf denselben Anlagenteil, sondern auch auf andere Anlagenteile auswirken.

Nach dem Stand der Technik ist es für Operatoren oftmals schwierig, die Auswirkung verfahrenstechnische Ereignisse auf andere Anlagenteile, oder gar desselben Anlagenteils, zu erkennen oder richtig einzuordnen. Insbesondere die Darstellung verfahrenstechnischer Ereignisse in unterschiedlichen grafischen Repräsentationen (Prozesswerte in Trendanzeigen und Alarme in Meldefolgeanzeigen) erschweren es dem Operator, Zusammenhänge (zwischen verschiedenen Prozessobjekten usw.) zu erkennen oder zu überprüfen.

In der EP 3 876 046 A1 ist ein Leitsystem einer technischen Anlage offenbart, welches eine Anpassung einer durch einen Operator Station Client erfolgten Darbietung von Visualisierungsinformationen durch einen Operator zu einer Laufzeit der technischen Anlage ermöglicht.

Der Erfindung liegt die Aufgabe zugrunde, ein Leitsystem für eine technische Anlage anzugeben, welches die Effizienz und die Flexibilität einer Bedienung und Beobachtung der technischen Anlage erhöht.

Diese Aufgabe wird gelöst durch ein Leitsystem für eine technische Anlage mit den Merkmalen des Anspruchs 1. Außerdem wird die Aufgabe gelöst durch eine Verwendung eines Leitsystems zum Betrieb einer technischen Anlage gemäß Anspruch 15. Vorteilhafte Weiterbildungen ergeben sich aus den abhängigen Ansprüchen.

Das erfindungsgemäße Leitsystem für eine technische Anlage, insbesondere Fertigungs- oder Prozessanlage, ist dazu ausgebildet, wenigstens eine Meldung in einer Meldeanzeige und einen zeitlichen Verlauf eines Messwertes in einem Verlaufsdiagramm visuell darzustellen. Das Leitsystem ist dadurch gekennzeichnet, dass es dazu ausgebildet ist, zur Laufzeit der technischen Anlage auf eine Anforderung eines Operators des Leitsystems hin in dem Verlaufsdiagramm zusätzlich zu dem zeitlichen Verlauf des Messwertes einen zeitlichen Aspekt der Meldung visuell darzustellen.

Bei der technischen Anlage kann es sich um eine Anlage aus der Prozessindustrie wie beispielsweise eine chemische, pharmazeutische, petrochemische oder eine Anlage aus der Nahrungs- und Genussmittelindustrie handeln. Hiermit umfasst sind auch jegliche Anlagen aus der Produktionsindustrie, Werke, in denen z.B. Autos oder Güter aller Art produziert werden. Technische Anlagen, die zur Durchführung des erfindungsgemäßen Verfahrens geeignet sind, können auch aus dem Bereich der Energieerzeugung kommen. Windräder, Solaranlagen oder Kraftwerke zur Energieerzeugung sind ebenso von dem Begriff der technischen Anlage umfasst.

Unter einer Meldung wird ein Bericht vom Eintreten eines Ereignisses verstanden, das einen Übergang aus einem diskreten Zustand innerhalb der technischen Anlage in einen anderen diskreten Zustand darstellt.

Unter einem Leitsystem wird im vorliegenden Kontext ein computergestütztes, technisches System verstanden, das Funktionalitäten zum Darstellen, Bedienen und Leiten der technischen Anlage umfasst. Das Leitsystem kann auch Sensoren zur Ermittlung von Messwerten sowie verschiedene Aktoren umfassen. Zudem kann das Leitsystem sogenannte prozess- oder fertigungsnahe Komponenten umfassen, die zur Ansteuerung der Aktoren bzw. Sensoren dienen. Darüber hinaus kann das Leitsystem u.a. Mittel zur Visualisierung der verfahrenstechnischen Anlage und zu einem Engineering aufweisen. Das Leitsystem kann optional auch weitere Recheneinheiten für komplexere Regelungen und Systeme zur Datenspeicherung und -verarbeitung umfassen.

In an sich bekannter Weise ist das Leitsystem dazu ausgebildet, einen zeitlichen Verlauf von Messwerten (auch als sogenannte "Trendkurven" bezeichnet) in einem jeweiligen Verlaufsdiagramm visuell darzustellen. Die visuelle Darstellung kann beispielsweise auf einem Computerbildschirm, einem Tablet oder einem Smartphone erfolgen. Mit einem zeitlichen Verlauf eines Messwertes in einem Verlaufsdiagramm ist dabei eine visuelle Darstellung eines Verlaufs der Messwerte mit einer Zeitbasis gemeint. Das Verlaufsdiagramm zeigt dabei beispielsweise an, dass der erste Messwert zu einem Zeitpunkt t=5s von einem Startzeitpunkt aus einen Wert von 10 bar aufweist (für den Fall einer Druckgröße als Messwert).

Das Leitsystem ist dazu ausgebildet, eine Zusammenschau des zeitlichen Verlaufs des Messwertes und eines zeitlichen Aspektes einer Meldung in einem gemeinsamen Verlaufsdiagramm zu ermöglichen. Eines der wesentlichen Merkmale ist dabei, dass diese Zusammenschau zur Laufzeit der technischen Anlage auf eine Anforderung eines Operators des Leitsystems erzeugt wird. Mithilfe des erfindungsgemäßen Leitsystems kann der Operator innerhalb eines Anlagenbildes oder auch anlagenbildübergreifend, innerhalb eines verfahrenstechnischen Anlagenbereiches oder auch anlagenbereichsübergreifend automatisiert Korrelationen zwischen einer Meldung und dem zeitlichen Verlauf eines Messwertes anstoßen - sowohl für aktive als auch für historische Meldeereignisse. Meldungen wie Diagnosealarme, Operatormeldungen, usw. können vom Operator bei Verwendung des erfindungsgemäßen Leitsystems mit dem zeitlichen Verlauf in dem Verlaufsdiagramm flexibel korreliert werden.

Bei dem zeitlichen Aspekt kann es sich beispielsweise um den Zeitpunkt der Aktivierung der Meldung und dem Zeitpunkt der Deaktivierung der Meldung handeln. Durch die Gegenüberstellung des zeitlichen Verlaufs des Messwertes und dem Anfangs- bzw. Endpunkt der Meldung (also der Aktivierung und der Deaktivierung) kann der Operator unmittelbar Rückschlüsse über eine Korrelation des Messwertverlaufs und der Meldung ziehen.

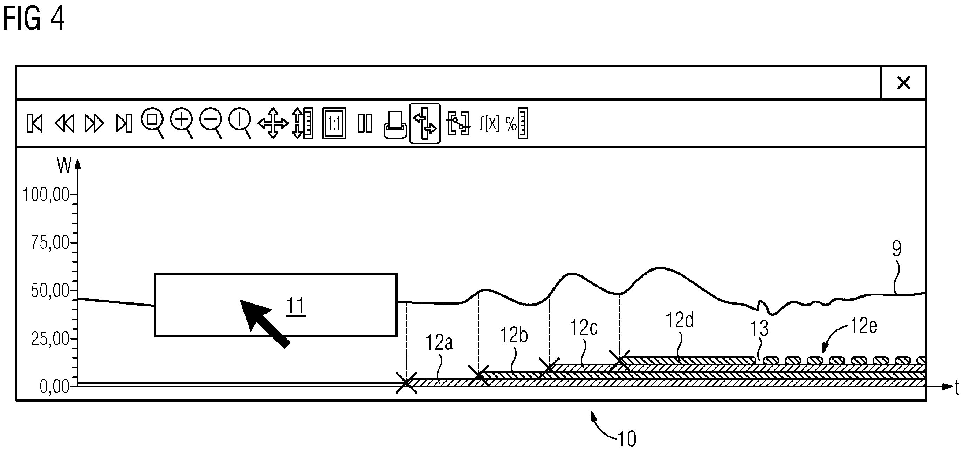

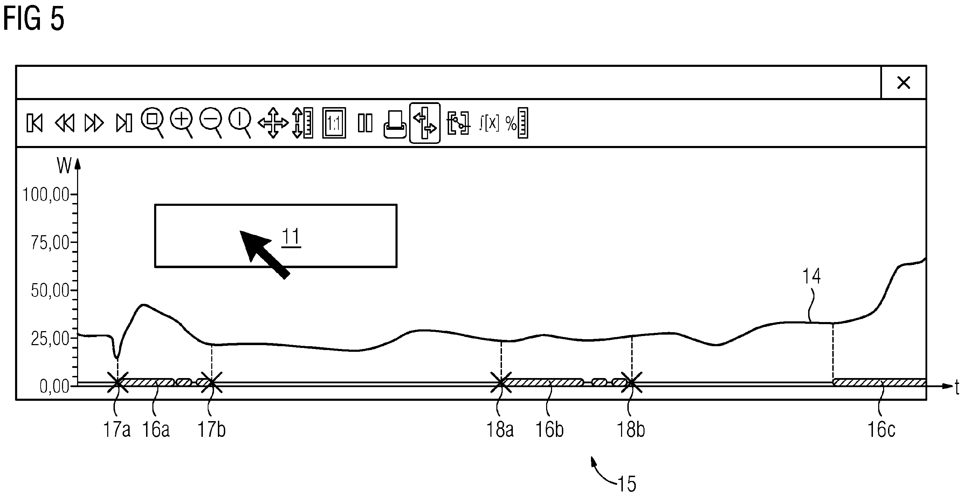

Der zeitliche Aspekt kann auch einen Quittierungszustand der Meldung umfassen. Dieser Quittierungszustand sagt dabei aus, ob die Meldung von dem Operator (oder von einem weiteren Operator) zu einem bestimmten Zeitpunkt quittiert ist. Beispielsweise kann für den Zeitbereich, in dem die Meldung quittiert ist, eine schraffierte Formgebung verwendet werden, um den Operator eingängig auf die Quittierung der Meldung hinzuweisen. Zur weiteren Veranschaulichung der schraffierten Formgebung sei auf die Figuren 4 und 5 sowie auf die dazugehörige Beschreibung der Ausführungsbeispiele verwiesen.

Das Leitsystem ist bevorzugt dazu ausgebildet, wenigstens ein Anlagenbild visuell darzustellen, wobei das Anlagenbild die technische Anlage oder einen Teil der technischen Anlage für ein Bedienen und Beobachten der technischen Anlage repräsentiert, und wobei das Leitsystem dazu ausgebildet ist, die Meldeanzeige und das Verlaufsdiagramm in dem Anlagenbild visuell darzustellen.

Im Falle einer Prozessanlage kann solch ein Anlagenbild beispielsweise grafische Repräsentationen von Pumpen, Ventilen, Tanks, Rohrleitungen, Brennkammern oder dergleichen umfassen. Die grafischen Repräsentationen können dabei aktuelle Prozessmesswerte, Statuswerte, (Alarm-)Meldungen oder dergleichen umfassen.

In diesem Fall sind die Meldeanzeige und das Verlaufsdiagramm Teil desselben Anlagenbildes. Es ist aber auch möglich, dass die Meldeanzeige in einem ersten Anlagenbild und das Verlaufsdiagramm in einem zweiten, von dem ersten Anlagenbild verschiedenen Anlagenbild dargestellt werden. Dies ist insbesondere für den Fall mehrerer Teilanlagen relevant, die mithilfe des Leitsystems bedient und beobachtet werden.

Besonders bevorzugt ist das Leitsystem dazu ausgebildet, eine Mehrzahl von Meldungen in der Meldeanzeige oder in verschiedenen Meldeanzeigen darzustellen, wobei das Leitsystem dazu ausgebildet ist, zur Laufzeit der technischen Anlage auf eine Anforderung eines Operators des Leitsystems hin einen jeweiligen zeitlichen Aspekt der Mehrzahl von Meldungen in dem Verlaufsdiagramm visuell darzustellen. In dem Verlaufsdiagramm werden demnach mehrere Meldungen visuell dargestellt. Diese können beispielsweise verschiedene Farb- oder Formgebungen aufweisen, um sie einfacher voneinander unterscheiden zu können. Die Meldung oder die Mehrzahl von Meldungen kann jeweils eine Alarmmeldung darstellen. Dabei stellt eine Alarmmeldung eine Meldung dar, die eine in der Regel unverzügliche Reaktion eines Operators der technischen Anlage erfordert.

Im Rahmen einer bevorzugten Weiterbildung der Erfindung ist das Leitsystem dazu ausgebildet, zur Laufzeit der technischen Anlage, in Reaktion auf eine Auswahl der Meldung oder der Mehrzahl von Meldungen durch eine Auswahl eines in dem Verlaufsdiagramm visuell dargestellten Aspektes der Meldung oder der Mehrzahl von Meldungen durch den Operator des Leitsystems, die zu der ausgewählten Meldung gehörige Meldeanzeige mit der Meldung dem Operator visuell darzustellen, insbesondere durch eine bestimmte visuelle Hervorhebung der Meldung und/oder der Meldeanzeige. Mit anderen Worten kann der Operator den zuvor ausgeführten Prozess auch in umgekehrter Richtung durchführen: In dem Verlaufsdiagramm wählt er die visuelle Darstellung eines zeitlichen Aspektes eines Messwertes an (durch Klicken, Tippen oder dgl.), worauf ihm das Leitsystem die Meldung in der dazugehörigen Meldeanzeige visuell darstellt (ggf. durch Farb-/Formgebung akzentuiert). Dabei können dem Operator automatisch Details der Meldung angezeigt werden, die in dem Verlaufsdiagramm aus Ergonomiegründen nicht angezeigt werden können.

Die Anforderung des Operators kann eine graphische Verschiebeoperation oder eine Kopieren-und-Einfügen Anweisung darstellen. Bei einer solchen Verschiebeoperation zieht der Operator die Meldung aus der Meldeanzeige auf einen Bereich des Verlaufsdiagramms ("Drag&Drop"), wobei er hierzu beispielsweise eine Computermaus oder einen/mehrere Finger einer seiner Hände verwendet. Bei einer Kopieren-und-Einfügen Anweisung "klickt" oder "tippt" der Operator auf eine Meldung in der Meldeanzeige, wählt eine von dem Leitsystem bereitgestellte Kopierfunktionalität aus und "klickt" oder "tippt" auf das Verlaufsdiagramm und wählt dort eine von dem Leitsystem bereitgestellte Einfügungsfunktionalität aus ("Copy& Paste").

Im Rahmen einer vorteilhaften Weiterbildung der Erfindung ist das Leitsystem dazu ausgebildet, den in dem Verlaufsdiagramm visualisierten zeitlichen Verlauf des Messwertes statisch darzustellen. Der aktuell in dem Verlaufsdiagramm dargestellte visuelle Verlauf wird dabei "eingefroren". Dadurch kann der Operator den zeitlichen Verlauf besonders einfach und gezielt mit der Meldung oder der Mehrzahl von Meldungen vergleichen. Dabei kann das Leitsystem dazu ausgebildet sein, eine gegebenenfalls notwendige Anpassung einer Zeitachse des zeitlichen Verlaufs des Messwertes automatisch vorzunehmen. Das Leitsystem kann auch dazu ausgebildet sein, dem Operator eine Änderungsfunktionalität bezüglich der Anpassung der Zeitachse des zeitlichen Verlaufs des Messwertes bereitzustellen.

Das Leitsystem kann dazu ausgebildet sein, dem Operator eine Auswahlfunktionalität bezüglich des in dem Verlaufsdiagramm visualisierten zeitlichen Verlaufs des Messwertes bereitzustellen, derart, dass der Operator zwischen einer statischen und einer dynamischen visuellen Darstellung des zeitlichen Verlaufs des Messwertes wechseln kann. Eine dynamische visuelle Darstellung bedeutet dabei, dass der zeitliche Verlauf des Messwertes auf einem aktuellen Stand gehalten wird, wodurch der Operator eine aktuelle Entwicklung des Messwertes effizient überblicken und verfolgen kann. Es ist natürlich auch möglich, dass nur eine dynamische visuelle Darstellung des zeitlichen Verlaufs dargestellt wird, ohne dass eine Auswahlfunktionalität vorgehalten werden würde.

Das Leitsystem ist bevorzugt dazu ausgebildet, den in dem Verlaufsdiagramm visuell dargestellten zeitlichen Verlauf mit dem zusätzlichen zeitlichen Aspekt der Meldung oder mit den zusätzlichen zeitlichen Aspekten der Mehrzahl von Meldungen in einer gemeinsamen Datei in einem Speicher abzulegen. Der hinterlegte Verlauf kann damit zu einem späteren Zeitpunkt für nachfolgende Auswertungen verwendet werden. Der Speicher kann Teil des Leitsystems sein und in der technischen Anlage selbst realisiert sein. Es ist aber auch möglich, dass ein cloudbasierter Speicher verwendet wird.

Bevorzugt weist das Leitsystem einen Operator Station Server auf, der dazu ausgebildet ist, den zeitlichen Verlauf des Messwertes anhand von aus der technischen Anlage empfangenen Messdaten zu erzeugen, und welcher dazu ausgebildet ist, die Meldung oder die Mehrzahl von Meldungen aus der technischen Anlage zu empfangen, und welche dazu ausgebildet ist, den zeitlichen Verlauf und die Meldung oder die Mehrzahl von Meldungen an einen oder mehrere mit dem Operator Station Server verbundene Operator Station Clients zu übertragen, welcher oder welche die visuelle Darstellung des zeitlichen Verlaufs in dem Verlaufsdiagramm und der Meldung oder der Mehrzahl von Meldungen in der Meldeanzeige vornehmen.

Das Leitsystem kann mit einem oder mehreren Automatisierungsgeräten verbunden sein, die dem Operator Station Server den zeitlichen Verlauf des aus der technischen Anlage stammenden Messwertes übermitteln.

Unter einem "Operator Station Server" wird vorliegend ein Server verstanden, der zentral Daten eines Bedien- und Beobachtungssystems sowie in der Regel Alarm- und Messwertarchive eines Leitsystems einer technischen Anlage erfasst und Benutzern zur Verfügung stellt. Der Operator Station Server stellt in der Regel eine Kommunikationsverbindung zu Automatisierungssystemen der technischen Anlage her und gibt Daten der technischen Anlage zur Visualisierung an sogenannte Operator Station Clients weiter, die zur Bedienung und Beobachtung eines Betriebs der einzelnen Funktionselemente der technischen Anlage dienen. Der Operator Station Server kann über Client-Funktionen verfügen, um auf die Daten (Archive, Meldungen, Tags, Variablen) anderer Operator Station Server zuzugreifen.

Dadurch sind Bilder eines Betriebs der technischen Anlage auf dem Operator Station Server mit Variablen anderer Operator Station Server (Server-Server-Kommunikation) kombinierbar. Bei dem Operator Station Server kann es sich, ohne sich darauf zu beschränken, um einen SIMATIC PCS 7 Industrial Workstation Server der Firma SIEMENS handeln.

Ein Operator der technischen Anlage kann über den Operator Station Client, welcher beispielsweise ein Tablet, ein Smartphone, ein Personal Computer oder dergleichen sein kann, zum Zwecke eines Bedienens und Beobachtens der technischen Anlage auf den Operator Station Server zugreifen.

Die zuvor formulierte Aufgabe wird zudem gelöst durch die Verwendung eines Leitsystems wie zuvor erläutert zum Betrieb einer technischen Anlage, insbesondere Fertigungs- oder Prozessanlage.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung von Ausführungsbeispielen, die im Zusammenhang mit den Zeichnungen näher erläutert werden. Es zeigen:
- FIG 1: eine Meldeanzeige eines Leitsystems gemäß einem ersten Aspekt;
- FIG 2: eine Meldeanzeige eines Leitsystems gemäß einem zweiten Aspekt;
- FIG 3: ein Verlaufsdiagramm eines Leitsystems gemäß einem ersten Aspekt;
- FIG 4: ein Verlaufsdiagramm eines Leitsystems gemäß einem zweiten Aspekt;
- FIG 5: ein Verlaufsdiagramm eines Leitsystems gemäß einem dritten Aspekt; und
- FIG 6: ein Leitsystem in einer schematischen Darstellung.

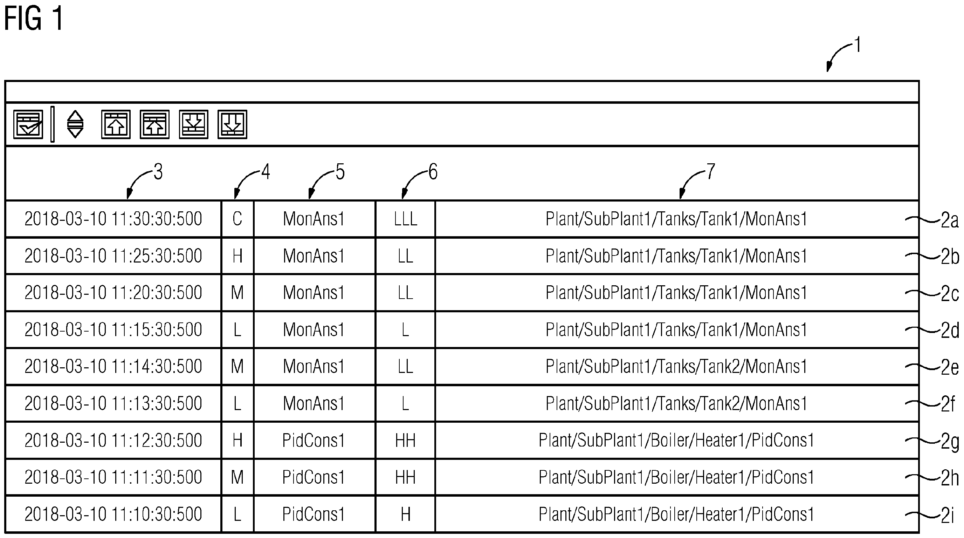

In FIG 1 ist eine Meldeanzeige 1 dargestellt, die von einem Leitsystem im Rahmen eines Bedienens und Beobachtens einer technischen Anlage für einen Operator der technischen Anlage bereitgestellt wird. Die Meldeanzeige 1 kann dabei teil eines Anlagenbildes sein, welches die technische Anlage vollständig oder teilweise repräsentiert. In der Meldeanzeige 1 sind im vorliegenden Beispiel neun verschiedene Meldungen 2a, 2b, 2c, 2d, 2e, 2f, 2g, 2h, 2i dargestellt. In einer ersten Spalte 3 ist ein Zeitpunkt einer Aktivierung der jeweiligen Meldung 2a, 2b, 2c, 2d, 2e, 2f, 2g, 2h, 2i dargestellt. In weiteren Spalten sind Informationen bezüglich einer Kritikalität (zweite Spalte 4), einer Kategorisierung (dritte Spalte 5 bzw. vierte Spalte 6) und einer Eingruppierung der Meldung in einer Hierarchie der technischen Anlage (fünfte Spalte 7) dargestellt.

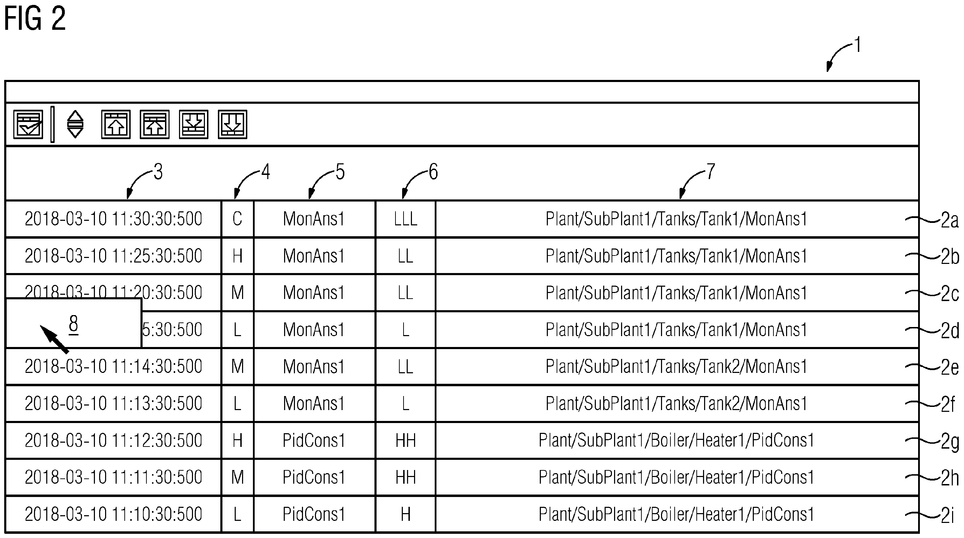

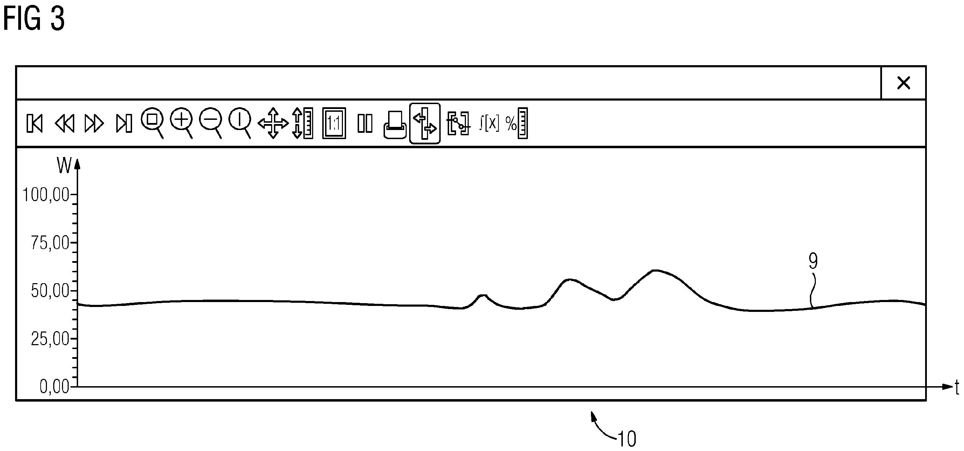

Möchte ein Operator eine oder mehrere Meldungen 2a, 2b, 2c, 2d, 2e, 2f, 2g, 2h, 2i (beispielsweise Alarmmeldungen) aus der Meldeanzeige 1 mit einer Trendkurve (vgl. FIG 3-5) korrelieren, um beispielsweise Querabhängigkeiten oder eine verfahrenstechnische Auswirkung auf denselben oder auf andere Anlagenteile zu untersuchen, kann er in der Meldeanzeige 1 die für ihn relevante Meldung 2a, 2b, 2c, 2d, 2e, 2f, 2g, 2h, 2i (also die entsprechende Zeile) markieren und eine "Kopieren"-Anforderung 8 an das Leitsystem stellen, wie es in FIG 2 dargestellt ist.

FIG 3 zeigt einen aktuellen (d.h. dynamischen) zeitlichen Verlauf 9 eines Messwertes in einem Verlaufsdiagramm 10 mit einer Zeitachse t und einer Werteachse W (mit nicht näher spezifizierten Einheiten). Das Verlaufsdiagramm kann in demselben Anlagenbild wie die Meldeanzeige 1 dargestellt sein. Sie kann aber auch Teil eines weiteren Anlagenbildes sein, das beispielsweise einen weiteren Teil der technischen Anlage für die Bedienung und Beobachtung widerspiegelt bzw. repräsentiert.

Durch eine in FIG 4 gezeigte "Einfügen"-Anforderung 11 kann der Operator einen zeitlichen Aspekt der zuvor selektierten Meldung 2a, 2b, 2c, 2d, 2e, 2f, 2g, 2h, 2i in dem Verlaufsdiagramm 10 visuell darstellen lassen. In dem Beispiel gemäß FIG 4 sind vier zeitliche Aspekte 12a, 12b, 12c, 12d dargestellt, welche vier Meldungen 2a, 2b, 2c, 2d, 2e, 2f, 2g, 2h, 2i zugeordnet sind. Die vier zeitlichen Aspekte 12a, 12b, 12c, 12d drücken sich in vier verschiedenen Aktivierungszeitpunkten (durch Kreuze symbolisiert) aus. Die Zeitpunkte der Deaktivierung sind in FIG 4 nicht zu erkennen, da die dazugehörigen Meldungen 2a, 2b, 2c, 2d, 2e, 2f, 2g, 2h, 2i zu einem "aktuellen" Zeitpunkt (d.h. zum Zeitpunkt der in FIG 4 vorliegenden Momentaufnahme) noch nicht deaktiviert sind. Es ist jedoch zu erkennen, dass die in der Zeichnung oberste Meldung zu einem Zeitpunkt 13 bereits quittiert worden ist, weshalb der dazugehörige zeitliche Aspekt 12d von diesem Zeitpunkt 13 an eine schraffierte Formgebung aufweist. Dadurch erhält der Operator unmittelbar die Information über den Quittierungszustand der Meldung 2a, 2b, 2c, 2d, 2e, 2f, 2g, 2h, 2i und kann einen etwaigen Einfluss auf den zeitlichen Verlauf 9 des Messwertes einfach und effizient bestimmen.

Die zeitlichen Aspekte 12a, 12b, 12c, 12d der Meldungen 2a, 2b, 2c, 2d, 2e, 2f, 2g, 2h, 2i weisen eine voneinander abweichende Farbgebung auf, um sie besser voneinander unterscheiden zu können. Die Farbgebung kann auch direkt von einer Kritikalität der Meldung 2a, 2b, 2c, 2d, 2e, 2f, 2g, 2h, 2i abhängen (beispielsweise: rot = kritisch, gelb = Warnung, grün = unkritisch).

Wie in FIG 4 dargestellt, kann der Operator aus der Gegenüberstellung beispielsweise ableiten, dass es einen offensichtlichen Zusammenhang zwischen den korrelierten Meldungen 2a, 2b, 2c, 2d, 2e, 2f, 2g, 2h, 2i und dem zeitlichen Verlauf 9 bzw. dessen Schwankungen gibt. Auch kann man erkennen, wie sich nach der Quittierung 13 der Meldung mit dem oben dargestellten zeitlichen Aspekt 12d mutmaßlich die Korrekturmaßnahmen eines anderen Operators auf den zeitlichen Verlauf 9 des Messwertes auswirken. Auch wenn die Meldungen 2a, 2b, 2c, 2d, 2e, 2f, 2g, 2h, 2i beispielsweise aus einem anderen Anlagenteil stammen, so kann es dennoch Rückwirkungen geben, die ggf. in der Bedienung und Beobachtung nicht unmittelbar wahrgenommen werden, da Meldungen 2a, 2b, 2c, 2d, 2e, 2f, 2g, 2h, 2i aus anderen Anlagenteilen mit einem anderen Pfad in einer technologischen Hierarchie gemeldet werden als den, den die Messwerte bzw. die dazugehörigen Objekte der technischen Anlage aufweisen, und auf die sich die Meldung 2a, 2b, 2c, 2d, 2e, 2f, 2g, 2h, 2i sekundär auswirkt. Weil beispielsweise verfahrenstechnische Teilanlagen oder technische Einrichtungen z.B. über Rohrleitungen zusammenhängen, kann die vorliegende Erfindung ein besonders geeignetes Werkzeug bereitstellen, um effizient die Ursache bei nicht unmittelbar sichtbaren Querabhängigkeiten evaluieren zu können.

Die Gegenüberstellung kann auch bei einem historischen zeitlichen Verlauf 14 eines Messwertes in einem Verlaufsdiagramm 15 vorgenommen werden, was in FIG 5 dargestellt ist. Das Verlaufsdiagramm 15 kann beispielsweise einem Archiv des Leitsystems entnommen worden sein. Durch die getätigte "Einfügen"-Anforderung 11 werden in diesem Fall drei zeitliche Aspekte 16a, 16b, 16c dargestellt. Bei dem ersten Aspekt 16a und dem zweiten Aspekt 16b ist jeweils ein Zeitpunkt der Aktivierung 17a, 18a und ein Zeitpunkt der Deaktivierung 17b, 18b der dazugehörigen Meldung 2a, 2b, 2c, 2d, 2e, 2f, 2g, 2h, 2i dargestellt.

Durch ein Anwählen des jeweiligen zeitlichen Aspekts 12a, 12b, 12c, 12d, 16a, 16b, 16c in den FIG 3-5 ist es für den Operator möglich, in umgekehrter Richtung zurück in die Meldeanzeige 1 zu springen, um dort die betreffende Meldung 2a, 2b, 2c, 2d, 2e, 2f, 2g, 2h, 2i angezeigt zu bekommen. Dabei können dem Operator umfangreichere Informationen zu der betreffenden Meldung 2a, 2b, 2c, 2d, 2e, 2f, 2g, 2h, 2i angezeigt werden, als es dies aus Platzgründen in dem Verlaufsdiagramm 10, 15 möglich wäre.

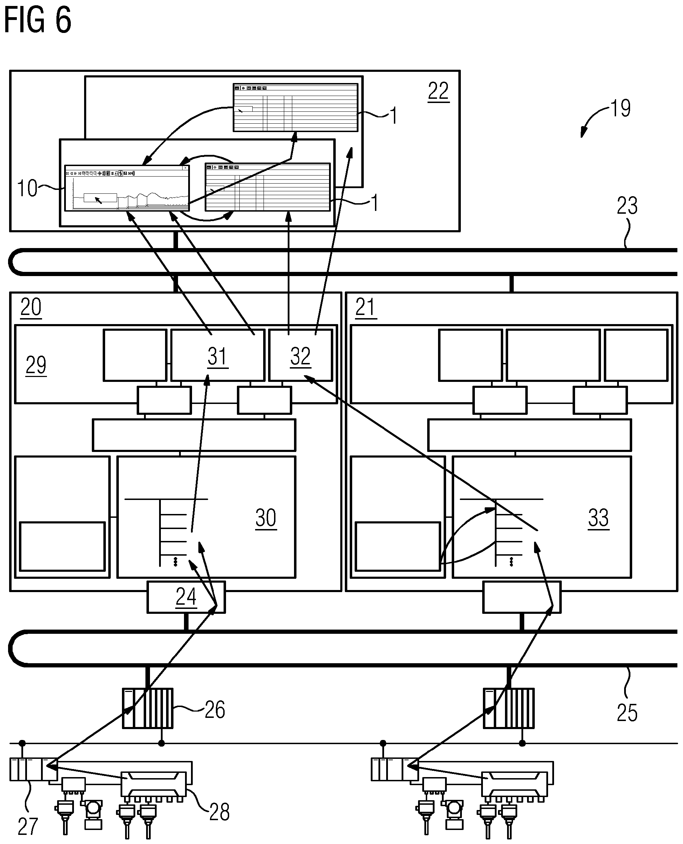

In FIG 6 ist ein Leitsystem 19 für die Bedienung und Beobachtung einer als Prozessanlage ausgebildeten technischen Anlage schematisch dargestellt. Das Leitsystem 19 umfasst einen ersten Operator Station Server 20, einen zweiten Operator Station Server 21 und einen Operator Station Client 22. Die Operator Station Server 20, 21 und der Operator Station Client 22 sind über einen Terminalbus 23 miteinander und optional mit nicht dargestellten weiteren Komponenten des Leitsystems 19 wie einem Archivserver oder einem Engineering Station Server verbunden.

Ein Benutzer bzw. Operator kann zum Zwecke des Bedienens und Beobachtens über den Operator Station Client 22 mittels des Terminalbus 23 auf die Operator Station Server 20, 21 zugreifen. Der Terminalbus 23 kann, ohne sich darauf zu beschränken, beispielsweise als Industrial Ethernet ausgebildet sein.

Der erste und der zweite Operator Station Server 20, 21 sind identisch aufgebaut, weshalb aus Effizienzgründen nur der erste Operator Station Server 20 im Detail erläutert wird. Der erste Operator Station Server 20 weist eine Geräteschnittstelle 24 auf, die mit einem Anlagenbus 25 verbunden ist. Über diese Geräteschnittstelle 24 ist der erste Operator Station Server 20 mit einem Automatisierungsgerät 26 sowie mit weiteren Komponenten der verfahrenstechnischen Anlage wie Peripheriegeräten 27, 28 verbunden und kann mit diesen kommunizieren. Der Anlagenbus 25 kann, ohne sich darauf zu beschränken, beispielsweise als Industrial Ethernet ausgebildet sein.

Auf dem ersten Operator Station Server 20 sind (unter anderem) ein Visualisierungsdienst 29, ein Prozessabbild 24 und ein Prozessabbild 30 implementiert. Der in dem ersten Operator Station Server 20 integrierte Visualisierungsdienst 29 initiiert eine Übertragung von Visualisierungsinformationen an den Operator Station Client 22. Der Operator Station Client 22 ist dazu ausgebildet, eine Visualisierung, d.h. eine grafische Darbietung, insbesondere von Anlagenbildern, zum Bedienen und Beobachten der Prozessanlage darzustellen.

In dem Prozessabbild 30 des ersten Operator Station Servers 20 ist eine Momentaufnahme der (Signal-)Zustände von mit dem ersten Operator Station Server 20 verbundenen Geräten und/oder Applikationen hinterlegt. Ein Verlaufsdiagrammdienst 31 des Visualisierungsdienstes 29 erzeugt, unter Einbezug aktueller Prozessmesswerte aus dem Prozessabbild 30, ein Verlaufsdiagramm 10 (genauer: Visualisierungsinformationen, die zur Erzeugung des Verlaufsdiagramms 10 von dem Operator Station Client 22 nutzbar sind), welches zur visuellen Darstellung an den Operator Station Client 22 übertragen wird. Ein Meldeanzeigedienst 32 erzeugt eine Meldeanzeige 1, welche analog an den Operator Station Client 22 zur visuellen Darstellung übertragen wird. Dabei überwacht der Meldeanzeigedienst 32 nicht nur das Prozessabbild 30 des ersten Operator Station Servers 20, sondern auch das Prozessabbild 33 des zweiten Operator Station Servers 21.

Der Operator kann nun die zuvor erläuterten Anforderungen 8, 11 vornehmen und eine Gegenüberstellung von Meldung(en) 2a, 2b, 2c, 2d, 2e, 2f, 2g, 2h, 2i und zeitlichem Verlauf 9, 14 bewirken.

Obwohl die Erfindung im Detail durch das bevorzugte Ausführungsbeispiel näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

## Patentansprüche

1. Leitsystem (19) für eine technische Anlage, insbesondere Fertigungs- oder Prozessanlage, das dazu ausgebildet ist, wenigstens eine Meldung (2a, 2b, 2c, 2d, 2e, 2f, 2g, 2h, 2i) in einer Meldeanzeige (1) und einen zeitlichen Verlauf (9, 14) eines Messwertes in einem zeitlichen Verlaufsdiagramm (10, 15) visuell darzustellen,
**dadurch gekennzeichnet, dass**
das Leitsystem (19) dazu ausgebildet ist, zur Laufzeit der technischen Anlage auf eine Anforderung (8, 11) eines Operators des Leitsystems (19) hin in dem zeitlichen Verlaufsdiagramm (10, 15) zusätzlich zu dem zeitlichen Verlauf (9, 14) des Messwertes einen zeitlichen Aspekt (12a, 12b, 12c, 12d, 16a, 16b, 16c) der Meldung (2a, 2b, 2c, 2d, 2e, 2f, 2g, 2h, 2i) visuell darzustellen.

2. Leitsystem (19) nach Anspruch 1, das dazu ausgebildet ist, wenigstens ein Anlagenbild visuell darzustellen, wobei das Anlagenbild die technische Anlage oder einen Teil der technischen Anlage für ein Bedienen und Beobachten der technischen Anlage repräsentiert, und wobei das Leitsystem (19) dazu ausgebildet ist, die Meldeanzeige (1) und das zeitliche Verlaufsdiagramm (10, 15) in dem Anlagenbild visuell darzustellen.

3. Leitsystem (19) nach Anspruch 1, das dazu ausgebildet ist, wenigstens ein erstes Anlagenbild und ein zweites Anlagenbild visuell darzustellen, wobei das erste Anlagenbild und das zweite Anlagenbild jeweils die technische Anlage oder einen Teil der technischen Anlage für ein Bedienen und Beobachten der technischen Anlage repräsentieren, und wobei das Leitsystem (19) dazu ausgebildet ist, die Meldeanzeige (1) in dem ersten Anlagenbild und das zeitliche Verlaufsdiagramm (10, 15) in dem zweiten Anlagenbild visuell darzustellen.

4. Leitsystem (19) nach einem der Ansprüche 1 bis 3, das dazu ausgebildet ist, eine Mehrzahl von Meldungen (2a, 2b, 2c, 2d, 2e, 2f, 2g, 2h, 2i) in der Meldeanzeige (1) oder in verschiedenen Meldeanzeigen (1) darzustellen, und das dazu ausgebildet ist, zur Laufzeit der technischen Anlage auf eine Anforderung (8, 11) eines Operators des Leitsystems (19) hin einen jeweiligen zeitlichen Aspekt (12a, 12b, 12c, 12d, 16a, 16b, 16c) der Mehrzahl von Meldungen (2a, 2b, 2c, 2d, 2e, 2f, 2g, 2h, 2i) in dem zeitlichen Verlaufsdiagramm (10, 15) visuell darzustellen.

5. Leitsystem (19) nach einem der vorangegangenen Ansprüche, bei dem die Anforderung (8, 11) des Operators eine graphische Verschiebeoperation oder eine Kopieren-und-Einfügen Anweisung darstellt.

6. Leitsystem (19) nach einem der vorangegangenen Ansprüche, das dazu ausgebildet ist, den in dem Verlaufsdiagramm (10, 15) visuell dargestellten zeitlichen Verlauf (9, 14) des Messwertes statisch darzustellen.

7. Leitsystem (19) nach einem der vorangegangenen Ansprüche, das dazu ausgebildet ist, dem Operator eine Auswahlfunktionalität bezüglich des in dem zeitlichen Verlaufsdiagramm (10, 15) visualisierten zeitlichen Verlaufs (9, 14) des Messwertes bereitzustellen, derart, dass der Operator zwischen einer statischen und einer dynamischen visuellen Darstellung des zeitlichen Verlaufs (9, 14) des Messwertes wechseln kann.

8. Leitsystem (19) nach einem der vorangegangenen Ansprüche, das dazu ausgebildet ist, eine Kritikalität der Meldung (2a, 2b, 2c, 2d, 2e, 2f, 2g, 2h, 2i) in dem zeitlichen Verlaufsdiagramm (10, 15) visuell darzustellen, insbesondere durch eine bestimmte Farbgebung.

9. Leitsystem (19) nach einem der vorangegangenen Ansprüche, das dazu ausgebildet ist, einen Zeitbereich von einer Aktivierung bis zu einer Deaktivierung der Meldung (2a, 2b, 2c, 2d, 2e, 2f, 2g, 2h, 2i) in dem zeitlichen Verlaufsdiagramm (10, 15) visuell darzustellen.

10. Leitsystem (19) nach einem der vorangegangenen Ansprüche, das dazu ausgebildet ist, einen Quittierungszustand (13) der Meldung (2a, 2b, 2c, 2d, 2e, 2f, 2g, 2h, 2i) in dem zeitlichen Verlaufsdiagramm (10, 15) visuell darzustellen, insbesondere durch eine schraffierte Formgebung.

11. Leitsystem (19) nach einem der vorangegangenen Ansprüche, das dazu ausgebildet ist, zur Laufzeit der technischen Anlage, in Reaktion auf eine Auswahl der Meldung (2a, 2b, 2c, 2d, 2e, 2f, 2g, 2h, 2i) oder der Mehrzahl von Meldungen (2a, 2b, 2c, 2d, 2e, 2f, 2g, 2h, 2i) durch eine Auswahl eines in dem zeitlichen Verlaufsdiagramm (10, 15) visuell dargestellten zeitlichen Aspektes (12a, 12b, 12c, 12d, 16a, 16b, 16c) der Meldung (2a, 2b, 2c, 2d, 2e, 2f, 2g, 2h, 2i) oder der Mehrzahl von Meldungen (2a, 2b, 2c, 2d, 2e, 2f, 2g, 2h, 2i) durch den Operator des Leitsystems, die zu der ausgewählten Meldung (2a, 2b, 2c, 2d, 2e, 2f, 2g, 2h, 2i) gehörige Meldeanzeige (1) mit der Meldung (2a, 2b, 2c, 2d, 2e, 2f, 2g, 2h, 2i) dem Operator visuell darzustellen, insbesondere durch eine bestimmte visuelle Hervorhebung der Meldung (2a, 2b, 2c, 2d, 2e, 2f, 2g, 2h, 2i) und/oder der Meldeanzeige (1).

12. Leitsystem (19) nach einem der vorangegangenen Ansprüche, das dazu ausgebildet ist, den in dem Verlaufsdiagramm (10, 15) visuell dargestellten zeitlichen Verlauf (9, 14) mit dem zusätzlichen zeitlichen Aspekt (12a, 12b, 12c, 12d, 16a, 16b, 16c) der Meldung (2a, 2b, 2c, 2d, 2e, 2f, 2g, 2h, 2i) oder mit den zusätzlichen zeitlichen Aspekten der Mehrzahl von Meldungen (2a, 2b, 2c, 2d, 2e, 2f, 2g, 2h, 2i) in einer gemeinsamen Datei in einem Speicher abzulegen.

13. Leitsystem (19) nach einem der vorangegangenen Ansprüche, bei dem die Meldung (2a, 2b, 2c, 2d, 2e, 2f, 2g, 2h, 2i) oder die Mehrzahl von Meldungen (2a, 2b, 2c, 2d, 2e, 2f, 2g, 2h, 2i) jeweils eine Alarmmeldung darstellt.

14. Leitsystem (19) nach einem der vorangegangenen Ansprüche, welches einen Operator Station Server aufweist, der dazu ausgebildet ist, den zeitlichen Verlauf (9, 14) des Messwertes anhand von aus der technischen Anlage empfangenen Messdaten zu erzeugen, und welcher dazu ausgebildet ist, die Meldung (2a, 2b, 2c, 2d, 2e, 2f, 2g, 2h, 2i) oder die Mehrzahl von Meldungen (2a, 2b, 2c, 2d, 2e, 2f, 2g, 2h, 2i) aus der technischen Anlage zu empfangen, und welche dazu ausgebildet ist, den zeitlichen Verlauf und die Meldung (2a, 2b, 2c, 2d, 2e, 2f, 2g, 2h, 2i) oder die Mehrzahl von Meldungen (2a, 2b, 2c, 2d, 2e, 2f, 2g, 2h, 2i) an einen oder mehrere mit dem Operator Station Server verbundene Operator Station Clients zu übertragen, welcher oder welche die visuelle Darstellung des zeitlichen Verlaufs (9, 14) in dem zeitlichen Verlaufsdiagramm (10, 15) und der Meldung (2a, 2b, 2c, 2d, 2e, 2f, 2g, 2h, 2i) oder der Mehrzahl von Meldungen (2a, 2b, 2c, 2d, 2e, 2f, 2g, 2h, 2i) in der Meldeanzeige (1) vornehmen.

15. Verwendung eines Leitsystems (19) gemäß einem der vorangegangenen Ansprüche zum Betrieb einer technischen Anlage, insbesondere Fertigungs- oder Prozessanlage.
